# EUROPÄISCHE PATENTSCHRIFT

(11) **EP 3 913 215 B1**
(45) Veröffentlichungstag und Bekanntmachung des Hinweises auf die Patenterteilung: **27.03.2024**
(21) Anmeldenummer: 21177761.0
(22) Anmeldetag: 03.01.2014
(51) Int. Cl.: F03D 7/02, F03D 17/00

(54) **VERFAHREN ZUM AUSMESSEN EINES ROTORBLATTWINKELS**
METHOD FOR MEASURING A ROTOR BLADE ANGLE
PROCÉDÉ DE MESURE DE L'ANGLE D'INCIDENCE D'UNE PALE DE ROTOR

(30) Priorität: 24.01.2013 DE 102013201163
(43) Veröffentlichungstag der Anmeldung: 24.11.2021
(62) Teilanmeldung aus: 14700814.8
(73) Patentinhaber: Wobben Properties GmbH, 26607 Aurich (DE)
(72) Erfinder: Stoltenjohannes, Jürgen, 26605 Aurich (DE)
(74) Vertreter: Eisenführ Speiser

(56) Entgegenhaltungen:
- WO-A1-2011/161058
- DE-C1- 10 032 314
- DE-U1- 29 609 242
- US-A1- 2009 266 160
- US-A1- 2012 200 699

## Beschreibung

Die vorliegende Erfindung betrifft ein Verfahren zum Erfassen eines Blattwinkels eines Rotorblattes eines Rotors einer Windenergieanlage. Außerdem betrifft die vorliegende Erfindung eine Messanordnung zum Erfassen eines Blattwinkels eines Rotorblattes eines Rotors einer Windenergieanlage.

Der vorliegenden Erfindung liegt insbesondere eine sog. Horizontalachsenwindenergieanlage mit wenigstens einem, insbesondere drei verstellbaren Rotorblättern zugrunde. Diese Rotorblätter können in ihrem Winkel und damit in ihrem Anstellwinkel zum Wind verstellt werden, um möglichst optimale Leistung aus dem Wind zu entnehmen, oder um die Leistungsentnahme aus dem Wind insbesondere bei hohen Windgeschwindigkeiten zu reduzieren oder zu begrenzen. Beim Verstellen des Winkels des Rotorblattes, das auch als Pitchen bezeichnet wird, kann die Verstelleinheit grundsätzlich den aktuellen Blattwinkel, der hier synonym zu dem Begriff Rotorblattwinkel verwendet wird, erfassen. Das setzt aber voraus, dass zunächst der tatsächlich vorhandene Rotorblattwinkel mit dem von der Verstelleinheit angenommenen Winkel abgeglichen wird. Hierzu muss der tatsächliche Rotorblattwinkel, also die tatsächliche Stellung des Rotorblattes erfasst werden. Ggf. kann es auch später erforderlich sein, einen solchen Abgleich zu wiederholen oder zu korrigieren.

Insbesondere kann es passieren, dass bei drei Rotorblättern eines einen falschen Winkel, nämlich einen anderen Winkel als die beiden übrigen Rotorblätter und damit auch einen anderen Winkel als von der Verstelleinheit angenommen aufweist. Diese Winkelabweichung ist dann ständig präsent, weil auch die weitere Verstellung der Rotorblätter immer von dem falschen Winkel ausgeht, also für alle drei Rotorblätter von einem gleichen Winkel ausgeht, obwohl einer abweicht. Hierdurch können neben einer reduzierten Effizienz aufgrund des falschen Winkels auch Ungleichbelastungen der Rotorblätter auftreten. Hierdurch werden insbesondere auch etwaige Lager unsymmetrisch, insbesondere bezogen auf eine Drehachse, belastet. Zu der ungünstigen Effizienz kann somit ein erhöhter Verschleiß hinzutreten.

Hierzu schlägt das deutsche Patent DE 100 323 14 C1 eine Abstandsmessung zwischen dem Turm der Windenergieanlage und einem vorbeilaufenden Rotorblatt vor. Bei dieser Abstandsmessung mit einem Laserabstandssensor wird quasi kontinuierlich der Abstand des vorbeilaufenden Rotorblattes und damit dessen Kontur erfasst. Das Laserabstandsmessgerät ist entsprechend am Turm angeordnet und kann somit dieser Abstandsmessung und damit Konturerfassungen des vorbeilaufenden Rotorblattes durchführen.

Aus dem bekannten Profil und der erfassten Kontur des Rotorblattes kann dann der tatsächliche Winkel des Rotorblattes bestimmt werden. Eine solche Messung wird für alle Rotorblätter der Anlage durchgeführt, wobei zwischendurch keine Verstellung der Rotorblätter erfolgt, sodass dann alle Winkel dieser Rotorblätter verglichen und angeglichen werden können. So wird vermieden, dass unterschiedliche Blattwinkel eingestellt werden.

Bei dieser Messung wird aber der durch die Abstandsmessung erfasste Winkel auch durch die Ausrichtung der Windenergieanlage insgesamt beeinflusst, nämlich die sog. Azimutausrichtung der Windenergieanlage. Weicht diese Ausrichtung der Windenergieanlage, nämlich insbesondere die Ausrichtung der Gondel der Windenergieanlage, die den Rotor trägt, bzw. die Ausrichtung der Rotorachse von der Ausrichtung des Laserabstandssensors ab, so verändert das auch den erfassten Rotorblattwinkel. Der hierdurch entstehende Fehler ist aber systematisch für alle Rotorblätter der Anlage gleich, wenn die Azimutstellung während der Messung unverändert bleibt. Damit kann somit trotzdem ein Abgleich der Rotorblätter untereinander erfolgen.

Außerdem beschreibt das Patent, dass bei bekanntem Winkel zwischen Laserstrahl und Nabe auch ein "echter" Blattwinkel bestimmt werden kann.

Eine solche Bestimmung des Winkels zwischen Nabe und Messsensor kann jedoch schwierig sein, jedenfalls wenn ein hoher Anspruch an die Genauigkeit dieser Messung gestellt wird. Eine Genauigkeitserhöhung für die Messung des Blattwinkels, also die Abstandsmessung zum Blatt hin zur Abtastung der Kontur, kann durch eine Wiederholung der Messung bzw. Messungen aller Rotorblätter erzielt werden. Hierdurch lässt sich allerdings nur die Genauigkeit der Blattwinkel der Rotorblätter untereinander erhöhen. Mit anderen Worten wird hierbei ein relativer Blattwinkel erfasst und nur seine Genauigkeit kann erhöht werden. Unter relativem Blattwinkel ist der Blattwinkel in Bezug auf die übrigen Rotorblätter zu verstehen. Die Erfassung eines absoluten Blattwinkels bleibt damit jedenfalls hinsichtlich Genauigkeit problematisch.

Das Deutsche Patent- und Markenamt hat in der Prioritätsanmeldung zu vorliegender Anmeldung folgenden Stand der Technik recherchiert: DE 10 2011 053 968 A1.

Das Dokument WO 2011/161058 A1 betrifft ein Messverfahren zur Kontrolle und/oder Optimierung von Windenergieanlagen mit einem berührungslosen Abstandsmesssystem. Darin wird vorgeschlagen, an einem Rotorblatt wenigstens zwei Profile zu bestimmen und daraus eine Biegung, Steifigkeit und/oder Torsion des Rotorblatts zu ermitteln.

Der vorliegenden Erfindung liegt somit die Aufgabe zugrunde, wenigstens eines der oben genannten Probleme zu adressieren. Insbesondere soll eine Lösung zum möglichst genauen Erfassen einer absoluten Blattposition vorgeschlagen werden. Zumindest soll eine alternative Ausführungsform geschaffen werden.

Erfindungsgemäß wird ein Verfahren gemäß Anspruch 1 zum Erfassen eines Blattwinkels eines Rotorblattes eines Rotors einer Windenergieanlage vorgeschlagen. Dieses Verfahren ist somit dazu vorgesehen, einen absoluten Blattwinkel für jedes Rotorblatt zu erfassen. Hierbei bezeichnet der absolute Blattwinkel den Winkel des Rotorblattes in Bezug auf die Blattnabe, an dem das betreffende Rotorblatt befestigt ist. Die Rotornabe bildet somit die Bezugsbasis für den jeweiligen Blattwinkel.

Die genaue Erfassung des Blattwinkels, die hier vorgeschlagen wird, kann grundsätzlich für Anlagen mit festem oder veränderlichem Rotorblattwinkel eingesetzt werden. Auch kann das Verfahren für Windenergieanlagen eingesetzt werden, bei denen Rotorblätter individuell verstellt werden.

Es wird somit vorgeschlagen, dass zunächst ein berührungsloses Messgerät vor der Windenergieanlage angeordnet und entsprechend auf dieWindenergieanlage ausgerichtet wird.

In einem nächsten Schritt wird die Windenergieanlage in ihrer Azimutposition zum Messgerät ausgerichtet. Es erfolgt also ein Ausrichten der Gondel, an der der Rotor drehbar gelagert angeordnet ist, in ihrer Azimutposition. Diese Ausrichtung erfolgt insbesondere so, dass die Rotorebene senkrecht zu der optischen Achse zwischen Messgerät und Windenergieanlage, insbesondere Turmmittelpunkt oder Mastmittelpunkt der Windenergieanlage, ausgerichtet wird. Die Rotorebene ist hierbei die Ebene, in der sich die Rotorblätter bewegen, bzw. zumindest die Ebene, in der sich die Blattspitzen der Rotorblätter bewegen, sollten sich die Rotorblätter aufgrund von Biegung und/oder Schrägstellung nicht exakt in einer Ebene bewegen. Auch ist dieser rechte Winkel zwischen Rotorebene und optischer Achse im Sinne einer Draufsicht zu verstehen. Hierbei wird von einer senkrecht stehenden Rotorebene ausgegangen. Sollte diese leicht schräg stehen, weil die Rotorachse nicht exakt waagerecht, sondern leicht schräg steht, kann ersatzweise eine waagerechte in der Rotorebene liegende Gerade betrachtet werden.

Ist nun die Windenergieanlage in diesem Sinne zum Messgerät ausgerichtet, nämlich insbesondere möglichst exakt, kann zur Messung der Rotor um seine Rotorachse gedreht werden. Hierbei wird nun mittels des berührungslosen Messgerätes in einer vorbestimmten Höhe, also an einer vorbestimmten axialen Position des Rotorblattes, das Profil des Rotorblattes abgetastet und erfasst. Die Abtastung erfolgt dabei so, dass kontinuierlich ein Abstand vom Messgerät zum Rotorblatt gemessen wird. Die Ausrichtung des Messgerätes bleibt hierbei konstant. Dadurch führt das Profil des Rotorblattes zu einer Änderung des Abstandes zum Messgerät und diese Abstandsänderung repräsentiert somit das Profil des Rotorblattes an der entsprechenden Position bzw. Höhe. Dabei wird nicht das gesamte Profil des Rotorblattes an der betreffenden Position erfasst, sondern nur seine dem Messgerät zugewandte Seite. Dies ist aber ausreichend, um daraus und in Kenntnis des bekannten Profils des installierten Rotorblattes den Blattwinkel zu bestimmen, insbesondere daraus zu berechnen.

Vorzugsweise erfolgt das Ausrichten der Windenergieanlage in ihrer Azimutposition so, dass eine Abstandsmessung eines Rotorblattes in einer ersten und in einer zweiten Position bei konstanter Azimutstellung erfolgt, wobei das Rotorblatt in der ersten Position der zweiten Position gegenübersteht. Die erste und die zweite Position sind somit im Grunde spiegelsymmetrisch zueinander bei einer senkrechten Spiegelebene. Bspw. kann die erste Position eine 5-Uhr-Stellung und die zweite eine 7-Uhr-Stellung sein, oder umgekehrt. Ebenso kommen für die erste und zweite Position bzw. umgekehrt eine 4-Uhr- und eine 8-Uhr-Stellung in Betracht. Als weiteres Beispiel ist eine 2-Uhr-Stellung und eine 10-Uhr-Stellung zu nennen. Dies sind nur Beispiele und bevorzugt werden eine 3-Uhr-Stellung und eine 9-Uhr-Stellung vorgeschlagen, nämlich dass für das Ausrichten der Windenergieanlage das Rotorblatt in den beiden Positionen jeweils waagerecht steht. Somit wird eine Abstandsmessung vom Messgerät zu einem vorbestimmten Punkt auf dem Rotorblatt vorgenommen, wenn dieses in der ersten Position steht. Anschließend wird das Rotorblatt in die gegenüberliegende Position, also die zweite Position, bewegt, indem der Rotor gedreht wird. Es erfolgt dann eine zweite Abstandsmessung von dem Messgerät zu dem vorbestimmten Punkt auf dem Rotorblatt, das nun in der zweiten Position ist. Wenn beide Abstandsmessungen zum selben Wert führen, bedeutet das, dass die Rotorebene quer zur optischen Achse des Messgerätes zum Turm besteht. Dann ist die Windenergieanlage in ihrer Azimutposition genau auf das Messgerät ausgerichtet, die Azimutposition wird dann für die weitere Messung nicht verändert und die Windenergieanlage somit in dieser Azimutposition festgesetzt. Anschließend wird der Rotor gedreht, um dann das wenigstens eine Blatt bzw. die Blätter abzutasten, um das Profil auszumessen und den Winkel zu bestimmen. Dieser Winkel ist nun der absolute Winkel, weil eine etwaige Azimutverstellung nicht vorhanden ist und somit auch nicht herausgerechnet werden muss. Entsprechend kann dann auch ein Abgleich mit etwaigen Einstellvorrichtungen zum Verstellen jedes Rotorblattes in seinem Anstellwinkel vorgenommen werden. Entsprechend kann schließlich die Einstellvorrichtung, soweit vorhanden, jedes Rotorblatt dessen Winkel korrekt einstellen.

Vorzugsweise liegt der vorbestimmte Punkt des Rotorblattes, zu dem hin die Abstandsmessung zum Ausrichten der Windenergieanlage vorgenommen wird, in blattaxialer Richtung etwa in der Mitte des Rotorblattes, insbesondere im Bereich von etwa 40 bis 60 % der Rotorblattlänge gemessen von ihrem Wurzelbereich an der Nabe zu ihrer Blattspitze.

Dadurch kann eine hohe Genauigkeit beim Ausrichten erzielt werden, weil dieser vorbestimmte Punkt in der ersten Position gegenüber demselben vorbestimmten Punkt aber in der zweiten Position sehr weit beabstandet ist und damit bereits eine geringe Azimutverstellung, als ein geringer Azimutwinkel zu einer großen Abstandsänderung an diesem vorbestimmten Punkt jeweils führt. Gleichzeitig wird ein solcher Messpunkt zu nah an der Rotorblattspitze vermieden, um etwaigen Ungenauigkeiten durch eine Verbiegung des Rotorblattes auszuschließen oder zumindest in einem geringen Rahmen zu halten. Hierbei wird berücksichtigt, dass sich eine etwaige, wenn auch geringe, Verbiegung des Rotorblattes als Auslenkung eines Rotorblattes im Bereich der Spitze am stärksten bemerkbar macht. Für einen Punkt, der in axialer Richtung etwa in der Mitte des Rotorblattes angeordnet ist, kann hier eine etwaige Auslenkung vernachlässigt werden.

Erfindungsgemäß wird vorgeschlagen, dass das Abtasten an einem oder mehreren Profilschnitten des jeweiligen Rotorblattes erfolgt. Somit wird das Rotorblatt wenigstens an einer axialen Position abgetastet, nämlich quer zur axialen Ausdehnung des Rotorblattes. Hierunterwird das Abtasten eines Profilschnittes verstanden, denn durch dieses Abtasten quer zur Längsausdehnung des Rotorblattes an dieser Stelle wird ein Schnitt des Rotorblattes an dieser Stelle erfasst, der das Profil des Rotorblattes in diesem Schnitt zeigt, was als Profilschnitt bezeichnet wird. Zusätzlich zu der Abtastung eines Profilschnittes kann ein weiterer Profilschnitt an einer anderen axialen Position des Rotorblattes abgetastet werden, um dadurch etwaige Fehler zu minimieren. Vorzugsweise werden zwei, drei oder mehr Profilschnitte des jeweiligen Rotorblattes abgetastet. Die Abtastung erfolgt in diesen Fall bei jedem Rotorblatt der Windenergieanlage jeweils an demselben Profilschnitt.

Eine vorteilhafte Ausgestaltung schlägt vor, dass das Messgerät von der Windenergieanlage beabstandet angeordnet wird. Vorzugsweise wird ein optisches Messgerät, insbesondere ein Lasermessgerät, verwendet. Das Messgerät wird in einer Entfernung von der Windenergieanlage, z.B. bezogen auf den Turmfuß der Windenergieanlage, angeordnet, die wenigstens der Höhe der Windenergieanlage entspricht. Unter der Höhe der Windenergieanlage wird hier die Höhe der Rotorachse über dem Erdboden verstanden. Sollte die Rotorachse leicht schräg stehen, wird vorzugsweise die Höhe der Rotorachse im Bereich der Rotornabe zugrundegelegt. Günstig ist es, als Abstand wenigstens die doppelte Höhe der Windenergieanlage zu wählen und weiter bevorzugt wird wenigstens die 3-fache Höhe der Windenergieanlage als Abstand gewählt. Hierdurch kann erreicht werden, dass die optische Achse von dem Messgerät nicht sehr steil verläuft und somit in einem günstigen Winkel zu dem jeweils abzutastenden Rotorblatt steht.

Vorteilhafterweise wird das Abtasten des Rotorblattes zum Erfassen des Profils des Rotorblattes mit demselben Messgerät durchgeführt, das zuvor zum Ausrichten der Windenergieanlage in ihrer Azimutposition verwendet wurde. Sowohl für das Abtasten des Rotorblattes, als auch für das Ausrichten der Windenergieanlage kann somit dieses Messgerät zur Abstandsmessung verwendet werden.

Vorzugsweise erfolgt das Abtasten und Erfassen des Profils des Rotorblattes oder eines Teils davon während sich der Rotor dreht, insbesondere während das betreffende Rotorblatt durch die Drehung des Rotors vor dem Turm passiert, wobei insbesondere eine kontinuierliche Abstandsmessung zum Erfassen des Profils bzw. eines Teils davon erfolgt. Somit kann beim Abtasten das Messgerät auf einen Punkt ausgerichtet und diese Ausrichtung während der Messung beibehalten werden. Das Rotorblatt dreht sich dann im Grunde an dem Messgerät bzw. an dem fixierten Messpunkt vorbei, wodurch die Abtastung somit entlang des Profilschnittes vorgenommen werden kann. Durch eine bevorzugte Messung in einer Position, bei der das Rotorblatt durch die Drehung des Rotors vor dem Turm passiert, wird somit im Wesentlichen bei senkrecht stehendem Rotorblatt gemessen, wodurch sich ein besonders günstiger Winkel zu einem auf dem Boden vor der Windenergieanlage angeordneten Messgerät ergibt. Außerdem ist in dieser Position mit dem geringsten Wind zu rechnen, weil das Rotorblatt unten steht und weil der Turm selbst nach vorne einen gewissen Windschatten bzw. Windreduzierung schafft. Es kann nun eine kontinuierliche Messung mit dem Messgerät erfolgen, um das Profil möglichst genau zu vermessen und somit möglichst genau den gewünschten Rotorblattwinkel berechnen zu können. Vorzugsweise wird digital gemessen und/oder digital ausgewertet und insoweit ist unter einer kontinuierlichen Messung auch eine zu verstehen, die mit hoher Abtastrate abtastet. Unter eine kontinuierliche Messung fällt insoweit auch eine digitale Messung.

Vorzugsweise erfolgt das Ausrichten der Windenergieanlage in ihrer Azimutposition iterativ. Hierzu wird zunächst eine Abstandsmessung eines Rotorblattes in der ersten und des Rotorblattes in der zweiten Position bei konstanter Azimutstellung durchgeführt. Die Azimutstellung wird hierbei eingefroren oder es wird zumindest überwacht, dass keine Änderung der Azimutposition erfolgt, und bei beiden Positionen dieselbe Azimutposition vorliegt.

In dem nächsten Schritt wird dann die Windenergieanlage in ihrer Azimutposition verstellt, wenn die Abstände der beiden Positionen zum Messgerät unterschiedlich waren. Die Abstandsmessung und Verstellung wird dann solange wiederholt, bis die Abstände der beiden Positionen gleich sind, was auch den Fall beinhaltet, dass die Abweichungen unter einer Toleranzgrenze liegen. Es wird darauf hingewiesen, dass grundsätzlich auch für eine Ausrichtung der Windenergieanlage die Messung der beiden Positionen unter Verwendung unterschiedlicher Rotorblätter durchgeführt werden kann. Hierbei könnte bspw. die Messung ohne Verdrehen des Rotors erfolgen, wenn bspw. ein Rotorblatt in der4-Uhr-Position und das andere Rotorblatt in 8-Uhr-Position steht, wenn ein Rotor mit drei Rotorblättern untersucht wird. Problematisch hierbei ist aber, sicherzustellen, dass bei beiden Rotorblättern tatsächlich an demselben Punkt, insbesondere an derselben rotorblattaxialen Position jeweils gemessen wird. Eine Möglichkeit dieses Problem zu lösen wäre, von vornherein, z. B. vor der Installation der Rotorblätter, einen oder mehrere solcher Abstandsmesspunkte auf dem Rotorblatt anzuzeichnen oder zumindest so zu markieren, dass das Messgerät einen solchen Punkt identifizieren kann. Dann könnte die Abstandsmessung ohne Drehung des Rotors durchgeführt werden.

Gemäß einer vorteilhaften Ausgestaltung wird vorgeschlagen, dass das Erfassen des Blattwinkels durchgeführt wird, während die Windenergieanlage in einem Arbeitspunkt und/oder Betriebsbereich betrieben wird, der keine Blattverstellung durchführt, insbesondere dass die Windenergieanlage hierbei in Teillast betrieben wird.

Unter einem Betriebsbereich wird insbesondere ein Drehzahl- und/oder Leistungsbereich verstanden.

Vorzugsweise erfolgt das Erfassen des Blattwinkels während die Windenergieanlage in einem Arbeitspunkt und/oder Betriebsbereich betrieben wird, wobei hier bei einer Windenergieanlage, die den Rotorblattwinkel einstellen kann, ein Arbeitspunkt bzw. Betriebsbereich gewählt, in dem keine Blattverstellung durchgeführt wird, insbesondere wird die Windenergieanlage bei so geringen Windgeschwindigkeiten hierbei betrieben, dass sie in einem Teillastbereich arbeitet. Hierdurch kann die Messung jedenfalls nach Ausrichtung der Windenergieanlage in ihrer Azimutposition einfach erfolgen, während sich der Rotor durch den Wind angetrieben dreht. Alternativ wird vorgeschlagen, dass der Rotor dadurch gezielt gedreht wird, dass der Generator der Windenergieanlage im Motorbetrieb betrieben wird.

Erfindungsgemäß wird auch eine Messanordnung zum Erfassung eines Blattwinkels eines oder mehrerer Rotorblätter eines Rotors einer Windenergieanlage gemäß Anspruch 9 vorgeschlagen. Eine solche Messanordnung umfasst neben der Windenergieanlage ein Messgerät, insbesondere in optisches Messgerät, das vor der Windenergieanlage am Boden positioniert und ausgerichtet wird. Die Messanordnung ist dazu konfiguriert, wenigstens ein Verfahren nach einer der vorstehend erläuterten Ausführungsformen durchzuführen.

Zum Ausrichten des Messgerätes, insbesondere auch zum Ausrichten des Messgerätes zum Vornehmen der beschriebenen Ausrichtung der Windenergieanlage in ihrer Azimutposition, umfasst die Messanordnung, insbesondere das Messgerät, gemäß einer Ausführungsform eine Zieloptik, mit der eine Ausrichtung gezielt auf einen konkreten Punkt auf dem Rotorblatt in einer vorbestimmten Stellung vorgenommen werden kann. Insbesondere ist eine solche Zieloptik dazu vorbereitet und geeignet, das Messgerät auf eine Markierung auf dem Rotorblatt auszurichten, während das Rotorblatt angehalten ist.

Nachfolgend wird die Erfindung anhand von Ausführungsbeispielen exemplarisch unter Bezugnahme auf die begleitenden Figuren näher erläutert.
- Fig. 1: zeigt eine Messanordnung mit einer Windenergieanlage und einem Messgerät.
- Fig. 2: zeigt schematisch die Abtastung eines Profilschnittes eines Rotorblattes bei einer Bewegung des Rotorblattes.
- Fig. 3: zeigt schematisch eine in der Azimutposition nicht ausgerichtete Windenergieanlage.
- Fig. 4: zeigt eine in ihrer Azimutposition ausgerichtete Windenergieanlage.
- Fig. 5: veranschaulicht erfindungsgemäß relevante Winkel in einer Draufsicht.

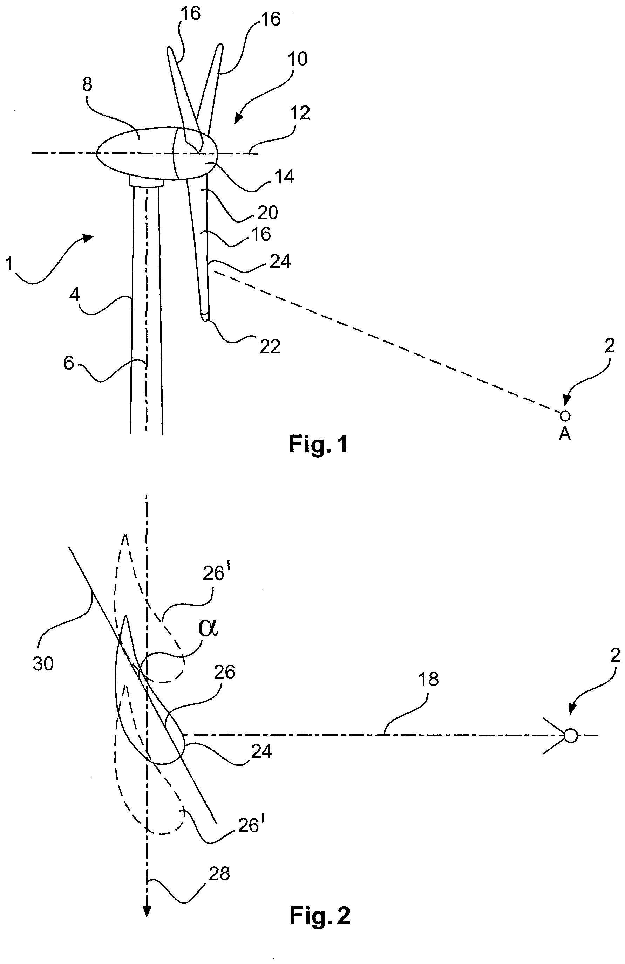

Figur 1 zeigt in einer schematischen Seitenansicht eine Windenergieanlage 1 und ein Messgerät 2, die zusammen im Wesentlichen eine Messanordnung einer Ausführungsform bilden. Die Windenergieanlage 1 weist einen Turm 4 mit einer Turmmittelachse 6 auf, auf dem eine Gondel 8 mit einem Rotor 10 angeordnet ist. Der Rotor 10 ist drehbar um eine Rotorachse 12 gelagert, die im Wesentlichen waagerecht steht. Der Rotor 10 weist dabei eine Nabe mit Spinner 14 auf, an der drei Rotorblätter 16 angeordnet sind. Ein Rotorblatt weist nach unten und befindet sich damit in der 6-Uhr-Stellung, die beiden anderen Rotorblätter 16 weisen schräg nach oben und befinden sich in der 10-Uhr- bzw. 2-Uhr-Stellung.

Das Messgerät 2 ist etwa auf einen mittleren Bereich des unteren Rotorblattes 16 ausgerichtet, was durch eine optische Linie 18 veranschaulicht ist, die auch repräsentativ für einen Laserstrahl zum Durchführen einer optischen Messung an dem Rotorblatt 16 steht. Das Messgerät 2 steht dabei in einem Abstand von etwa der doppelten Höhe der Windenergieanlage 1, bezogen auf die Rotorachse 12, vor der Windenergieanlage auf dem Boden.

Die Rotorblätter 16, was in Figur 1 nur für das untere Rotorblatt 16 eingezeichnet ist, weisen jeweils eine Blattwurzel 20 zum Anordnen an der Nabe bzw. Spinner 14 auf und eine Blattspitze 22. Figur 1 veranschaulicht die Anordnung von drei Rotorblättern 16, wobei die beiden oben dargestellten Rotorblättern 16 auch zur Veranschaulichung etwas schräg zueinander gezeichnet sind, um diese besser sichtbar zu machen. Im Falle einer exakten Seitenansicht auf die Windenergieanlage 1 und damit den Rotor 10 wäre oben nur ein Rotorblatt sichtbar.

Figur 2 zeigt als prinzipielle Darstellung eine Draufsicht auf einen Profilschnitt 26 eines Rotorblattes 16 im Sinne einer Ansicht von oben, bezogen auf die Anordnung der Figur 1. Die Größenverhältnisse der Figur 2 und der Figur 1 sind jedoch der besseren Übersichtlichkeit halber unterschiedlich gewählt. Der Profilschnitt ist dabei an einer längsaxialen Position des Rotorblattes 16 in Höhe eines Abtastpunktes 24 vorgenommen, der zur Veranschaulichung auch in Figur 1 eingezeichnet ist, nämlich der Punkt, an dem die optische Linie 18 bzw. bspw. ein Laserstrahl 18 zum Abtasten auf das Rotorblatt 16 trifft.

Figur 2 zeigt auch zwei gestrichelt dargestellten Profilschnitte 26', die den Profilschnitt 26 und damit das Rotorblatt 16 zu unterschiedlichen Positionen aufgrund einer Bewegung des Rotorblattes 16 zeigt. Dabei ist eine Bewegungsrichtung 28 eingezeichnet. Die Bewegungsrichtung 28 liegt definitionsgemäß in der Rotorebene des Rotors 10.

Die optische Linie 18 steht senkrecht zur Bewegungsrichtung 28.

Damit kann das Messgerät 2 durch die Bewegung des Rotorblattes 16 den Profilschnitt 26 abtasten, jedenfalls die zum Messgerät 2 gewandte Seite des Profilschnitts 26. Damit wird dieser Teil des Profilschnittes 26 erfasst und damit die Stellung des Profilschnittes 26 und damit des Rotorblattes 16 zur Bewegungsrichtung 28 und damit zur Rotorebene erfasst.

Dem Profilschnitt 26 bzw. dem Rotorblatt 16 ist dabei eine Ausrichtung 30 zugeordnet, die bspw. die Sehne des Profilschnittes 26 sein kann. Insoweit wird hier exemplarisch auf die Sehne 30 zur Erläuterung Bezug genommen, obwohl als Ausrichtung auch eine Gerade definiert werden kann. Aus dem abgetasteten Profilschnitt 26 bzw. dem davon abgetasteten Teil ist somit die Stellung des Profilschnittes und damit die Stellung der Ausrichtung 30, nämlich Sehne 30 bekannt, nämlich bezogen auf die Rotorebene bzw. die Bewegungsrichtung 28. Dies kann durch den Winkel *α* angegeben werden, der hier als Winkel zwischen der Bewegungsrichtung 28 und der Ausrichtung 30 bzw. Sehne 30 eingezeichnet ist.

Die Bestimmung des Blattwinkels *α*, also der Winkel zwischen Ausrichtung 30 und Bewegungsrichtung 28 und damit der Winkel zwischen Ausrichtung 30 bzw. Sehne 30 und Rotorebene wird hier unter der Voraussetzung berechnet, dass die optische Linie 18 senkrecht zur Rotorebene bzw. gemäß der Ansicht der Figur 2 senkrecht zur Bewegungsrichtung 28 steht.

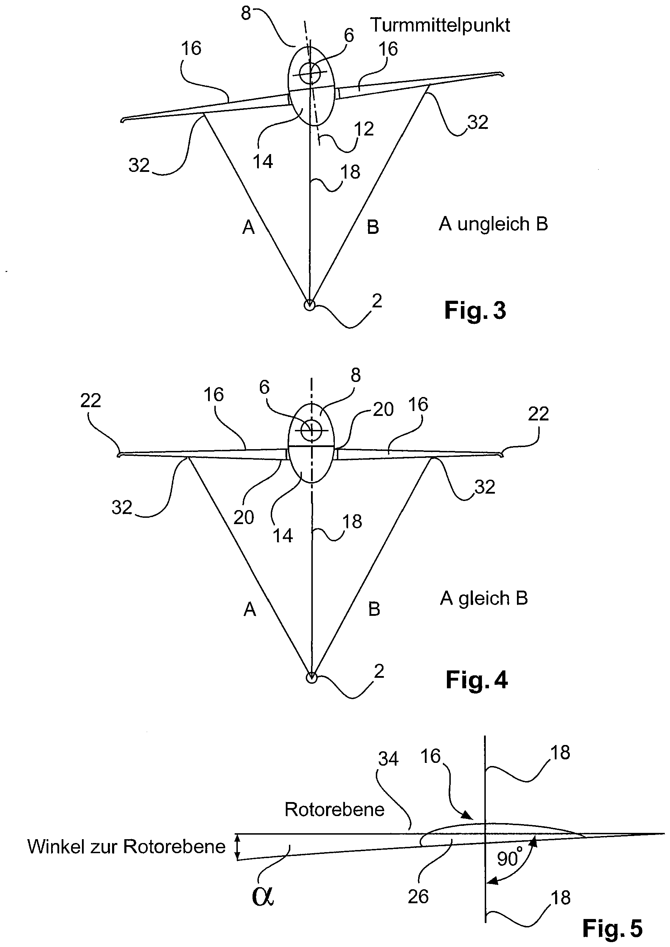

Dafür ist eine Ausrichtung erforderlich, die ebenfalls mittels des Messgerätes 2 vorgenommen werden kann, wie die Figuren 3 und 4 erläutern. Figur 3 zeigt dafür in einer Draufsicht eine noch nicht in ihrer Azimutposition ausgerichtete Gondel 8. Zur Erfassung und letztlich Durchführung der Ausrichtung wird von dem Messgerät 2 jeweils ein Abstand zum Rotorblatt 16 erfasst, nämlich bei jeweils einer waagerechten Position des Rotorblattes 16. Bei der gezeigten linken Position des Rotorblattes 16, die als erste Position bezeichnet werden kann, wird zu einem Messpunkt 32 auf dem Rotorblatt 16 ein Abstand A zum Messgerät 2 gemessen. Zu demselben Messpunkt 32 wird in der rechten waagerechten Position des Rotorblattes 16, die als zweite Position bezeichnet werden kann, ein Abstand B gemessen.

Aus Figur 3 ist leicht erkenntlich, dass der Abstand B größer ist, als der Abstand A. Entsprechend muss die Gondel in ihrer Azimutposition verstellt werden. Die Rotorebene, die auch als Rotorblattebene bezeichnet werden kann, steht somit noch nicht senkrecht zu der optischen Linie 18.

Rein vorsorglich wird auch hier darauf hingewiesen, dass zwar gleiche Bezugszeichen zwischen den Figuren 1 bis 5 verwendet werden, nicht aber immer exakt gleiche Elemente oder Größenverhältnisse vorliegen bzw. gezeigt sind. Die Figuren dienen zur Veranschaulichung.

Figur 4 zeigt im Grunde die gleiche Situation in Figur 3, außer dass die Abstände A und B nun gleich sind (und insoweit A und B in Figur 4 dem Wert nach nicht identisch sind mit den Abständen A und B der Figur 3). Die Windenergieanlage, nämlich die Gondel 8, ist nun in ihrer Azimutposition auf das Messgerät 2 ausgerichtet und die Rotorebene steht senkrecht zur optischen Linie 18. Damit liegen gemäß der Draufsicht der Figur 4 die optische Linie 18 und die Rotorachse 12 übereinander. Die Azimutposition kann nun angehalten, insbesondere eingefroren, werden und die unter Bezug auf Figuren 1 und 2 erläuterte Abtastung des Rotorblattes 16 kann nun durchgeführt werden.

Figur 5 erläutert die Ausrichtung zwischen optischer Achse 18 und Rotorebene 34, bezogen auf eine Draufsicht gemäß der Figur 4. Somit liegt zwischen der Rotorebene 34 und der optischen Linie 18 ein rechter Winkel vor. Rein vorsorglich wird darauf hingewiesen, dass natürlich in einer Seitenansicht, wie sie Figur 1 zeigt, kein rechter Winkel zwischen der optischen Linie 18 und der Rotorebene vorliegen muss. Üblicherweise wird hier auch kein rechter Winkel vorliegen, es sei denn, das Messgerät 2 wird in einer so hohen Position angeordnet, dass die optische Linie, also insbesondere ein Laserstrahl, vollständig senkrecht auf die Rotorebene 34 trifft.

Der erfasste Winkel *α* des Rotorblattes 16 bzw. des Profilschnittes 26 zur Rotorebene 34 kann somit bestimmt werden, wenn ein 90 Grad Winkel zwischen optischer Linie 18 und Rotorebene 34 eingehalten wird.

Im Übrigen wird zur Bestimmung einer Stellung bzw. eines relativen Winkels des Rotorblattes aus einer Abtastung seiner Oberfläche bzw. des Profilschnittes auf das deutsche Patent DE 100 323 14 C1 verwiesen. Obgleich die Berechnung eines Winkels aus dem abgetasteten Profil dort nachzulesen ist, wird nun vorgeschlagen, basierend auf einer möglichst exakten Azimutausrichtung einen absoluten Blattwinkel *α* zu bestimmen, der über die Angaben eines relativen Winkels zu den übrigen Rotorblätter hinausgeht. Dazu wird ein bodenbasiertes Messsystem, insbesondere bodenbasiertes Messgerät 2 vorgeschlagen, das genau auf die Windenergieanlage, nämlich insbesondere den Turmmittelpunkt, ausgerichtet ist. Außerdem wird eine genaue Azimutausrichtung der Windenergieanlage vorgeschlagen, sodass dann aus der durchgeführten Messung der absolute Blattwinkel *α* bestimmt werden kann. Die vorgeschlagene Ausrichtung der Gondel in ihrer Azimutposition ist dabei nicht auf etwaige, falls überhaupt vorhandene, fehlerbehaftete Positionswerte vom Azimutverstellsystem angewiesen, sondern schlägt ein vorteilhaftes und exakt durchführbares System und Verfahren vor, das den bodenbasierten Messsensor bzw. das bodenbasierte Messgerät verwenden kann.

## Patentansprüche

1. Verfahren zum Erfassen eines Blattwinkels (α) eines Rotorblattes (16) eines Rotors (10) einer Windenergieanlage (1) umfassend die Schritte
- Anordnen und Ausrichten eines berührungslosen Messgerätes (2) vor der Windenergieanlage (1),
- Ausrichten der Windenergieanlage (1) in ihrer Azimutposition zum Messgerät (2),
- Drehen des Rotors (10) der Windenergieanlage (1),
- Abtasten und Erfassen des Profils (26) des Rotorblattes (16) oder eines Teils davon in einer vorbestimmten Höhe mittels des berührungslosen Messgerätes (2) und
- Bestimmen des Blattwinkels (α) des Rotorblattes (16) aus den beim Abtasten des Profils (26) aufgenommenen Daten, wobei
- das Rotorblatt an einer Blattnabe befestigt ist, und als Blattwinkel ein absoluter Blattwinkel in Bezug auf die Blattnabe bestimmt wird, und
- das Abtasten an einem oder mehreren Profilschnitten (26) des jeweiligen Rotorblattes (16) erfolgt.

2. Verfahren nach Anspruch 1,
**dadurch gekennzeichnet, dass**
das Ausrichten der Windenergieanlage (1) in ihrer Azimutposition so erfolgt, dass
eine Abstandsmessung eines Rotorblattes (16) in einer ersten und in einer zweiten Position bei konstanter Azimutstellung erfolgt, wobei das Rotorblatt (16) in der ersten Position der zweiten gegenübersteht.

3. Verfahren nach Anspruch 2,
**dadurch gekennzeichnet, dass**
das Rotorblatt (16) beim Ausrichten der Windenergieanlage (1) in ihrer Azimutposition in beiden Positionen etwa waagerecht steht, nämlich in der ersten Position in 3-Uhr-Stellung und in der zweiten Position in 9-Uhr-Stellung oder umgekehrt.

4. Verfahren nach einem der vorstehenden Ansprüche,
**dadurch gekennzeichnet, dass**
als berührungsloses Messgerät (2) ein optisches Messgerät (2), insbesondere ein Laser-Messgerät (2), verwendet wird und das Abtasten des Profils (26) des Rotorblattes (16) und/oder die Abstandsmessung optisch durch dieses Messgerät (2) erfolgt.

5. Verfahren nach einem der vorstehenden Ansprüche,
**dadurch gekennzeichnet, dass**
das Messgerät (2) von der Windenergieanlage (1) beabstandet angeordnet wird, insbesondere in einer Entfernung, die wenigstens der Höhe der Windenergieanlage (1) entspricht, vorzugsweise wenigstens der doppelten Höhe entspricht, insbesondere wenigstens der dreifachen Höhe der Windenergieanlage (1) entspricht.

6. Verfahren nach einem der vorstehenden Ansprüche,
**dadurch gekennzeichnet, dass**
das Abtasten erfolgt, während sich der Rotor (10) dreht, insbesondere während das betreffende Rotorblatt (16) durch die Drehung des Rotors (10) vor dem Turm (4) passiert, wobei insbesondere eine kontinuierliche Abstandsmessung zum Erfassen des Profils (26) bzw. eines Teils davon erfolgt.

7. Verfahren nach einem der vorstehenden Ansprüche,
**dadurch gekennzeichnet, dass**
das Ausrichten der Windenergieanlage (1) in ihrer Azimutposition iterativ erfolgt, indem
- eine Abstandsmessung eines Rotorblattes (16) in einer ersten und in einer zweiten Position bei konstanter Azimutstellung erfolgt und
- in einem nächsten Schritt die Windenergieanlage (1) in ihrer Azimutposition verstellt wird, wenn die Abstände (A, B) der beiden Positionen unterschiedlich waren und wobei
- die Abstandsmessung und Verstellung so lange wiederholt wird, bis die Abstände (A, B) der beiden Positionen gleich sind.

8. Verfahren nach einem der vorstehenden Ansprüche,
**dadurch gekennzeichnet, dass**
das Erfassen des Blattwinkels (α) durgeführt wird, während die Windenergieanlage (1) in einem Arbeitspunkt und/oder Betriebsbereich betrieben wird, der keine Blattverstellung durchführt, insbesondere dass die Windenergieanlage (1) hierbei in Teillast betrieben wird.

9. Messanordnung zum Erfassen eines Blattwinkels (α) eines Rotorblattes (16) eines Rotors (10) einer Windenergieanlage, umfassend ein Messgerät (2), insbesondere ein optisches Messgerät (2), wobei die Messanordnung zum Durchführen eines Verfahrens nach einem der Ansprüche 1 bis 8 konfiguriert ist.

## Claims

1. Method for capturing a blade angle (α) of a rotor blade (16) of a rotor (10) of a wind turbine (1), comprising the steps
- disposing and aligning a contactless measuring device (2) in front of the wind turbine (1),
- aligning the wind turbine (1) in its azimuth position in relation to the measuring device (2),
- rotating the rotor (10) of the wind turbine (1),
- sampling and capturing the profile (26) of the rotor blade (16), or a part thereof, at a predefined height, by means of the contactless measuring device (2), and
- determining the blade angle (α) of the rotor blade (16) from the data recorded during the sampling of the profile (26), wherein
- the rotor blade is attached to a blade hub and as blade angle an absolute blade angle is determined in relation to the blade hub, and
- the sampling is effected on one or more profile sections (26) of the respective rotor blade (16).

2. Method according to Claim 1,
**characterized in that**
the wind turbine (1) is aligned in its azimuth position such that a distance measurement of a rotor blade (16) is effected in a first and in a second position with a constant azimuth setting, the rotor blade (16) in the first position being opposite the second position.

3. Method according to Claim 2,
**characterized in that**,
as the wind turbine (1) is being aligned in its azimuth position, the rotor blade (16) is approximately horizontal in both positions, namely, in the first position, in a 3-o'clock position and, in the second position, in a 9-o'clock position, or vice versa.

4. Method according to any one of the preceding claims,
**characterized in that**
an optical measuring device (2), in particular a laser measuring device (2), is used as a contactless measuring device (2), and the sampling of the profile (26) of the rotor blade (16) and/or the distance measurement are/is effected optically by this measuring device (2).

5. Method according to any one of the preceding claims,
**characterized in that**
the measuring device (2) disposed at a distance from the wind turbine (1), in particular at a distance that corresponds at least to the height of the wind turbine (1), preferably at least twice the height, in particular at least three times the height of the wind turbine (1).

6. Method according to any one of the preceding claims,
**characterized in that**
the sampling is performed while the rotor (10) is rotating, in particular while the rotor blade (16) concerned passes in front of the tower (4) because of the rotation of the rotor (10), a continuous distance measurement, in particular, being effected for the purpose of capturing the profile (26), or a part thereof.

7. Method according to any one of the preceding claims,
**characterized in that**
the aligning of the wind turbine (1) in its azimuth position is effected iteratively, **in that**
- a distance measurement of a rotor blade (16) in the first position and of the rotor blade in the second position is first effected, with a constant azimuth setting, and,
- in a next step, the wind turbine (1) is adjusted in its azimuth position if the distances (A, B) of the two positions were different, and
- the distance measurement and adjustment continuing to be repeated until the distances (A, B) of the two positions are equal.

8. Method according to any one of the preceding claims,
**characterized in that**
the capturing of the blade angle (α) is performed while the wind turbine (1) is operated in a working point and/or operating range that does not effect a blade adjustment, in particular the wind turbine (1) in this case is operated under partial load.

9. Measuring arrangement for capturing a blade angle (α) of a rotor blade (16) of a rotor (10) of a wind turbine, comprising a measuring device (2), in particular an optical measuring device (2), the measuring arrangement being configured to perform a method according to any one of Claims 1 to 8.

## Revendications

1. Procédé de détection d'un angle de pale (α) d'une pale de rotor (16) d'un rotor (10) d'une éolienne (1), comprenant les étapes
- d'agencement et d'orientation d'un appareil de mesure (2) sans contact devant l'éolienne (1),
- d'orientation de l'éolienne (1) dans sa position azimutale par rapport à l'appareil de mesure (2),
- de rotation du rotor (10) de l'éolienne (1),
- de balayage et de détection du profil (26) de la pale de rotor (16) ou d'une partie de celle-ci à une hauteur prédéfinie au moyen de l'appareil de mesure (2) sans contact, et
- de définition de l'angle de pale (α) de la pale de rotor (16) à partir des données relevées lors du balayage du profil (26), dans lequel
- la pale de rotor est fixée sur un moyeu de pale, et un angle de pale absolu par rapport au moyeu de pale est défini en tant qu'angle de pale,
et
- le balayage est effectué sur une ou plusieurs coupes de profil (26) de la pale de rotor (16) respective.

2. Procédé selon la revendication 1,
**caractérisé en ce que**
l'orientation de l'éolienne (1) dans sa position azimutale est effectuée de telle sorte qu'une mesure de distance d'une pale de rotor (16) dans une première et dans une deuxième position est effectuée pour une position azimutale constante, dans lequel la pale de rotor (16) dans la première position est opposée à la deuxième.

3. Procédé selon la revendication 2,
**caractérisé en ce que**
la pale de rotor (16) est à peu près horizontale dans les deux positions lors de l'orientation de l'éolienne (1) dans sa position azimutale à savoir se situe dans une position à 3 heures dans la première position et dans une position à 9 heures dans la deuxième position, ou inversement.

4. Procédé selon l'une quelconque des revendications précédentes,
**caractérisé en ce que**
un appareil de mesure (2) optique, en particulier un appareil de mesure laser (2), est utilisé en tant qu'appareil de mesure (2) sans contact et le balayage du profil (26) de la pale de rotor (16) et/ou la mesure de distance sont effectués de manière optique par ledit appareil de mesure (2).

5. Procédé selon l'une quelconque des revendications précédentes,
**caractérisé en ce que**
l'appareil de mesure (2) est disposé à distance de l'éolienne (1), en particulier à un éloignement, qui correspond au moins à la hauteur de l'éolienne (1), correspond de préférence au moins au double de la hauteur, en particulier correspond au moins au triple de la hauteur de l'éolienne (1).

6. Procédé selon l'une quelconque des revendications précédentes,
**caractérisé en ce que**
le balayage est effectué pendant que le rotor (10) tourne, en particulier pendant que la pale de rotor (16) concernée passe devant le mât (4) du fait de la rotation du rotor (10), dans lequel en particulier une mesure de distance continue est effectuée pour détecter le profil (26) ou une partie de celui-ci.

7. Procédé selon l'une quelconque des revendications précédentes,
**caractérisé en ce que**
l'orientation de l'éolienne (1) dans sa position azimutale est effectuée de manière itérative,
**en ce que**
- une mesure de distance d'une pale de rotor (16) dans une première et dans une deuxième position est effectuée dans une position azimutale constante, et
- dans une prochaine étape, l'éolienne (1) est ajustée dans sa position azimutale lorsque les distances (A, B) des deux positions étaient différentes, et dans lequel
- la mesure de distance et l'ajustement sont répétés jusqu'à ce que les distances (A, B) des deux positions soient identiques.

8. Procédé selon l'une quelconque des revendications précédentes,
**caractérisé en ce que**
la détection de l'angle de pale (α) est mise en œuvre pendant que l'éolienne (1) fonctionne dans un point de travail et/ou dans une plage de service, qui ne met en œuvre aucun ajustement de pale, en particulier que l'éolienne (1) fonctionne ce faisant en régime partiel.

9. Ensemble de mesure pour détecter un angle de pale (α) d'une pale de rotor (16) d'un rotor (10) d'une éolienne, comprenant un appareil de mesure (2), en particulier un appareil de mesure (2) optique, dans lequel l'ensemble de mesure est configuré pour mettre en œuvre un procédé selon l'une quelconque des revendications 1 à 8.
